(19) Europäisches Patentamt

European Patent Office

Office européen des brevets

(11) **EP 4 471 678 A1**

(12) **EUROPEAN PATENT APPLICATION**

(43) Date of publication:
**04.12.2024 Bulletin 2024/49**

(21) Application number: **23176816.9**

(22) Date of filing: **01.06.2023**

(51) International Patent Classification (IPC):
***G06N 20/20*** *(2019.01)*     ***G06N 3/045*** *(2023.01)*
***G06N 3/084*** *(2023.01)*

(52) Cooperative Patent Classification (CPC):
**G06N 3/045; G06N 20/20;** G06N 3/084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
- **Nalisnick, Eric
  1086 ZR Amsterdam (NL)**
- **Zhang, Dan
  71229 Leonberg (DE)**
- **Jazbec, Metod
  1012 BH Amsterdam (NL)**

Remarks:
Amended claims in accordance with Rule 137(2) EPC.

(54) **SYSTEM AND METHOD FOR GENERATING INTERMEDIATE PREDICTIONS IN TRAINED MACHINE LEARNING MODELS**

(57)    Some embodiments are directed to generating intermediate predictions in a trained machine learning model. These trained machine learning models may comprise one or more input layers, multiple intermediate layers, and one or more output layers, which generate an output. A computer-implemented method may perform classification using the trained machine learning model, which includes the steps of feeding input data to the trained machine learning model, propagating the input data through a part of the trained machine learning model, obtaining intermediate predictions from the layers in the part of the trained machine learning model, ensembling these intermediate predictions to obtain an ensemble prediction, and using the ensemble prediction as a substitute for the output of the trained machine learning model in the classification. The ensembling phase may comprise determining the ensemble prediction as a product of weighted versions of the obtained intermediate predictions, and having a normalized probability density.

Fig. 2a

EP 4 471 678 A1

## Description

## Field of the invention

The presently disclosed subject matter relates to a system and computer-implemented method for performing classification tasks using a trained machine learning model, and to a computer-readable medium comprising instructions which, when executed by a processor system, cause the processor system to perform the method.

## Background of the invention

Machine learning models are nowadays widely used in many real-life applications. This way, the usage of machine learning models has led to many revolutionary improvements in various fields of technology. For example, a machine learning model may be trained to detect traffic participants in camera images. The machine learning model may then, after having been trained, be used in a self-driving car for real-time or near-real time classification tasks, for example to recognize the traffic participants nearby the car and to enable the car to react, if needed, to those other traffic participants, through, e.g., steering, braking, or giving rise to a warning.

When one desires to perform classification tasks in real-time or near-real time on a device or apparatus, a common problem which may be encountered when complex machine learning models are used is that the device or apparatus typically only has a limited computational budget for performing the classification tasks. For example, the system may face constraints on the amount of computations which can be performed per time unit, the memory which is available for temporarily storing data during the classification tasks, etc. The budget may also be dynamic, in that it may change over time, e.g., due to other processes running consecutively with the interference. In some examples, it may not be known in advance how much computational budget is available at any given time. This may be problematic, as machine learning models, and in particular complex machine learning models, are generally expensive to evaluate in terms of computational costs.

When faced with such a limited computational budget, a practical resort would be to execute the machine learning model in as far as the computational budget allows. Thereby, the input data may propagate through a part of the machine learning model but may not reach the final output layer(s) of the machine learning model. However, for such partial execution of the machine learning model to be useful, the machine learning model may need to be designed in such a way that the machine learning model is able to provide an intermediate output even when only part of the machine learning model is executed, and that such intermediate output serves as a good approximation of the final output of the whole machine learning model. This characteristics may also be referred to as 'interruptibility', which is the requirement that a model can be stopped and produce an answer at any time. Traditional neural networks do not satisfy the interruptibility requirement since they only produce an output after evaluating all the layers. Machine learning models which are interruptible are known per se. For example, anytime models, such as early-exit networks, enable intermediate predictions to be obtained by only partially executing the machine learning model, that is, by only propagating the input data through a part of the machine learning model.

The general expectation of such early-exit models and similar types of machine learning models assumes a certain proportionality between the computational budget and the performance of the early-exit model, and on average this assumption generally holds. However, this assumption does not hold true on each case level: the quality of predictions for individual data points is not guaranteed to improve with as the corresponding computational budget increases. This may be particularly disadvantageous, since one would like to know in advance how the allocated computational budget will affect the prediction of the model, and in particular, to trust that the evaluation of more layers does not result in a degradation of the prediction.

## Summary of the Invention

It would be desirable to obtain a computer-implemented method and system for performing classification tasks using a trained machine learning model, in which it is more predictable how the given allocated computational budget will affect the obtained prediction on a case-by-case level.

In accordance with a first aspect of the invention, as defined by claim 1, a computer-implemented method is provided for performing classification tasks using a trained machine learning model. In accordance with a further aspect of the invention, as defined by claim 15, a system is provided performing classification tasks using a trained machine learning model. In accordance with a further aspect of the invention, a computer-readable medium is provided as defined by claim 14.

The above measures provide a trained machine learning model which comprises one or more input layers, a plurality of intermediate layers, and one or more output layers. The machine learning model has been trained earlier, e.g., in a training phase. The one or more output layers are configured to generate an output of the trained machine learning model, which is typically a prediction. For example, when the machine learning model is implemented in a car, the output may be a prediction of which type of traffic participant is in front of the car, e.g., a pedestrian, other car, bus, etc. Such type of machine learning model may take various forms, such as a neural network, a support vector machine, or a Gaussian process. In some examples, the trained machine learning model may be a so-called ensemble model, in that it may comprise a plurality of trained machine learning submodels, which may for example be arranged in a serial manner, in a parallel manner, or a combination of these options.

The machine learning models as described in the preceding paragraph are known per se and may be used for classification tasks, for example for classification of objects in acquired images. Such classification tasks may generally work as follows.

First, input data may be fed into the one or more input layers of the trained machine learning model. Typically, the input data is sensor data obtained from one or more sensors, such as radar data, lidar data, ultrasound data, or image sensor data. In a specific example, the sensor data may be image data originating from a camera mounted on a car and being configured to capture the surroundings of the car.

Then, the input data may be propagated through the trained machine learning model in a so-called forward pass. Due to computational limitations or other constraints, e.g., in the aforementioned computational budget, the propagation may only be partial, in that the input data may only be partially propagated through the trained machine learning model. In other words, the forward pass may only be performed partially. The part of the trained machine learning model through which the data is propagated may comprise a subset of the plurality of layers of the trained machine learning model. Note that which particular part of the model, e.g., in terms of which and how many layers, may be determined by the computational budget, in that a smaller computational budget may result in the evaluation of fewer layers than a larger computational budget would allow.

Due to the forward pass being only partially performed, the trained machine learning model may be unable to generate an output using the output layer(s). To nevertheless obtain a prediction to be used as a substitute for the output, from the forward pass, a plurality of intermediate predictions may be obtained, which stem from the respective outputs of a plurality of layers in the model which could be evaluated in the forward pass. It is known per se to obtain such intermediate predictions. For example, in so-called early exit neural networks, the intermediate layers may be configured to directly provide such intermediate predictions as output. Alternatively, a post-processing may be applied to the intermediate layer outputs so as to generate an intermediate prediction in a form which resembles the normal output of the machine.

In accordance with the above measures, the plurality of intermediate predictions may be ensembled, by which an ensemble prediction is obtained. The ensembling step may involve calculating a product of weighted versions of the plurality of intermediate predictions, and directly or indirectly normalizing the probability density. The ensemble prediction which is thereby obtained may then be used as a substitute for the output of the trained machine learning model if the model were executed in full.

The above measures may provide a postprocessing of the intermediate outputs of a trained machine learning model, which may address the problem that the quality of intermediate predictions of a machine learning model may decrease when the computational budget increases. Namely, by using an ensemble of the intermediate predictions, and in particular a weighted product, the likelihood of the ensemble predictions, which expresses how well the ensemble prediction approximates the eventual output that would be obtained by a full execution of the machine learning model, may be likely or even certain to increase with an increasing computational budget. In other words, the monotonicity of the likelihood of the ensemble prediction as a function of the number of intermediate layers provided by the computational budget, and thus to which degree the forward pass is executed, may be improved.

Advantageously, since the above measures may be applied post-hoc, namely after the training of the machine learning model, it is not needed to modify the training process nor the machine learning model itself. In particular, an existing trained machine learning model may be used, and by means of the above measures, it may be avoided that the trained machine learning model's overall accuracy decays when more computational budget is available for the execution of the machine learning model.

It is known per se to attempt to improve the monotonicity of intermediate predictions. For example, Allingham and Nalisnick discuss in their paper 'A Product of Experts Approach to Early-Exit Ensembles' modifications to the training process of an ensemble of neural networks. The modified training process is said to result in the property that any subset of members in the ensemble formulation can be evaluated, and the whole-ensemble prediction is guaranteed to have non-zero probability. Disadvantageously, D3 requires the training process to be modified, which is not always possible nor desirable. For example, the modified training process may result in a worsened performance of the ensemble of neural networks when they are evaluated in full compared to a nonmodified training process. By only applying the above measures post-hoc, the machine learning model may be trained to achieve the best performance when evaluated in full, but may, if required, be evaluated partially.

In addition, the approach of Allingham and Nalisnick is limited to the scenario of deep ensembles, involving multiple neural networks trained in parallel; other types of early-exit models are not considered. Also, the quality of a prediction in the method presented in the paper increases on the dataset level, but for individual data points, the quality of a prediction may still decrease with more computations. By this, especially in the early stages of the anytime setting, the overall accuracy may suffer, while the overall accuracy of the model in the method currently proposed does not decay.

In an embodiment, obtaining the plurality of intermediate predictions comprises, for a respective intermediate prediction, applying an activation function to an output of a layer to obtain an activation function output for the layer, and normalizing the activation function output by a sum of activation function outputs of all of the plurality of layers in the part of the trained machine learning model.

In other words, in this embodiment the plurality of intermediate predictions may be obtained in the following way: for each of the separate layers in the part of the trained machine learning model, an activation function may be applied to the output of each of the separate layers. By doing so, an activation function output for the separate layer may be obtained in form of a function value for the activation function. The activation function output of each layer may then be normalized by the sum of all activation function outputs of the whole of the plurality of layers in the part of the trained machine learning model. The resulting normalized activation function value may then serve as the intermediate prediction for the respective layer, with the intermediate predictions then being ensembled in the manner as described previously to obtain an ensemble prediction.

One example is that Heaviside activation function may be used as the activation function. A preferred example is the use of a rectified linear unit (ReLU) function, or one of the approximated activation functions of the ReLU function, such as the softplus activation function. These activation functions have been found to provide an overall good performance quality.

In an embodiment, a weighted version of an intermediate prediction is weighted by exponentiating the intermediate prediction with a non-negative value.

In other words, in this embodiment, to generate the ensemble prediction, the product-of-experts approach may be used. In the product-of-experts approach, the weighted version of an intermediate prediction may be obtained by raising the intermediate prediction to a power of a non-negative value; here, the non-negative value then serves as a weight.

In an embodiment, the normalized probability density is obtained by scaling with a normalization constant. In other words, in this embodiment, when generating the ensemble prediction, a normalised probability distribution may be obtained by normalising the probability distribution via scaling with a normalization constant, such as the sum of the probability density function over the label space associated with the multiple classes in the classification task.

In an embodiment, the trained machine learning model may comprise a neural network, a support vector machine, or a Gaussian process. Furthermore, the trained machine learning model may be an anytime model, such as an early-exit neural network.

In an embodiment, the trained machine learning model may comprise an ensemble of a plurality of trained machine learning sub-models.

In an embodiment, the ensemble of the plurality of trained machine learning sub-models is one of a serial arrangement of trained machine learning sub-models; a parallel arrangement of trained machine learning sub-models, wherein the part of the trained machine learning model is a subset of the plurality of trained machine learning sub-models and wherein the plurality of intermediate predictions is obtained from respective outputs layers of the subset; and a combination of the serial arrangement and the parallel arrangement of trained machine learning sub-models.

In other words, the ensemble of a plurality of trained machine learning sub-models may be arranged in multiple ways. The arrangement may be a serial arrangement, or a parallel arrangement, wherein the part of the trained machine learning model may be a subset of the plurality of trained machine learning sub-models, and the plurality of intermediate predictions is obtained from respective outputs layers of the subset. Also, the arrangement may be a combination of the serial arrangement and the parallel arrangement of trained machine learning sub-models.

In an embodiment, the classification comprises an image classification. Such a classification may be employed for image recognition, such as the identification of certain objects in acquired images. When such a method is implemented in a car, the classification may generate as an output a prediction of the object class represented by an object in the image. For example, the object class may indicate whether the object is a pedestrian, another car, a bus, etc.

In an embodiment, the input data comprises sensor data obtained from one or more sensors, for example radar data, lidar data, ultrasound data, or image sensor data.

In an embodiment, the method further comprises executing the method in real-time or near-real time using a processing subsystem of a device, wherein the processing subsystem has a computational budget for performing the classification tasks, wherein an extent of the forward pass and thereby the part of the trained machine learning model through which the input data is propagated is determined by the computational budget.

In an embodiment, the method further comprises controlling a computer-controlled machine based on the ensemble prediction.

In an embodiment, the trained machine learning model is further trained on training data, wherein said further training comprises, in a training iteration:

feeding an instance of training data into the trained machine learning model;
partially performing a forward pass by partially propagating the instance of training data through a part of the trained machine learning model;
obtaining a plurality of intermediate predictions from respective outputs of a plurality of layers in the part of the trained machine learning model;
ensembling the plurality of intermediate predictions to obtain an ensemble prediction for use as a substitute for the output of the trained machine learning model, wherein the ensembling comprises determining the ensemble prediction as a product of weighted versions of the plurality of intermediate predictions and having a normalized probability density; and using the ensemble prediction in a loss function for the training iteration.

In other words, besides the post-hoc processing, a trained machine learning model may be finetuned using a partially executed forward pass in which the intermediate predictions are ensembled into an ensemble prediction, for example using the product-of-experts approach, and the ensemble prediction then being used in the training as a substitute for the output of the entire machine learning model.

**Brief description of the drawings**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

    **Fig. 1a** shows an embodiment of a system configured to perform classification using a trained machine learning model,
    **Fig. 1b** shows an embodiment of a system configured to perform classification using a trained machine learning model inside a car,
    **Fig. 2a** shows layers of an early-exit model and illustrates how an ensemble prediction is obtained from intermediate layer outputs;
    **Fig. 2b** shows an example of another type of trained machine learning model and illustrates how an ensemble prediction is obtained from intermediate layer outputs;
    **Fig. 2c** shows an example of a serial arrangement of trained machine learning sub-models,
    **Fig. 2d** shows an example of a parallel arrangement of trained machine learning sub-models,
    **Fig. 3** shows a method for performing classification using a trained machine learning model,
    **Fig. 4a** shows a computer-readable medium having a writable part comprising a computer program according to an embodiment, and
    **Fig. 4b** shows a representation of a processor system according to an embodiment.

**Reference signs list**

The following list of references and abbreviations is provided for facilitating the interpretation of the drawings and shall not be construed as limiting the claims.

| | |
|---|---|
| 110 | system for performing classification using trained machine learning model |
| 112 | data storage |
| 113 | car |
| 114 | camera |
| 115 | traffic participant |
| 130 | processing subsystem |
| 140 | memory |
| 150 | communication interface |
| 200 | trained machine learning model |
| 201 | input data $x$ |
| 202 | intermediate prediction $p_1$ |
| 203 | intermediate prediction $p_2$ |
| 204 | output $p_{out}$ of the trained machine model |
| 210 | input layer |
| 213 | ensemble prediction $p_{1:2}$ |
| 220 | intermediate layer $h_1$ |
| 230 | intermediate layer $h_2$ |
| 240 | intermediate layer $h_3$ |
| 245 | output layer $o$ |
| 250 | intermediate output-generating layer |
| 300 | trained machine learning model in serial arrangement |
| 301 | input data $x'$ of second sub-model in series |
| 302 | intermediate prediction $p_1'$ of second sub-model in series |
| 303 | intermediate prediction $p_2'$ of second sub-model in series |
| 304 | output of second sub-model in series $p_{out}'$ |
| 310 | input layer of second sub-model in series |
| 313 | ensemble prediction $p_{ens}$ of serial arrangement of trained machine learning sub-models |
| 320 | intermediate layer $h_1'$ of second sub-model in series |
| 330 | intermediate layer $h_2'$ of second sub-model in series |
| 345 | output layer $o'$ of second sub-model in series |
| 400 | trained machine learning model in parallel arrangement |
| 401 | input data $x'$ of second sub-model in parallel |
| 402 | intermediate prediction $p_1'$ of second sub-model in parallel |
| 403 | intermediate prediction $p_2'$ of second sub-model in parallel |
| 404 | output of second sub-model in parallel $p_{out}'$ |
| 405 | input data $x''$ of third sub-model in parallel |
| 406 | intermediate prediction $p_1''$ of third sub-model in parallel |
| 407 | intermediate prediction $p_2''$ of third sub-model in parallel |
| 408 | output of third sub-model in parallel $p_{out}''$ |
| 410 | input layer of second sub-model in parallel |
| 413 | ensemble prediction $p_{ens}$ of parallel arrangement of trained machine learning sub-models |
| 420 | intermediate layer $h_1'$ of second sub-model in parallel |

| | |
|---|---|
| 430 | intermediate layer $h_2$' of second sub-model in parallel |
| 420 | intermediate layer $h_1$' of second sub-model in parallel |
| 430 | intermediate layer $h_2$' of second sub-model in parallel |
| 445 | output layer o' of second sub-model in parallel |
| 450 | input layer of third sub-model in parallel |
| 460 | intermediate layer $h_1$" of third sub-model in parallel |
| 470 | intermediate layer $h_2$" of third sub-model in parallel |
| 485 | output layer o" of third sub-model in parallel |
| 500 | computer-implemented method for performing classification using a trained machine learning model |
| 510 | feeding input data into the trained machine learning model |
| 520 | partially performing a forward pass |
| 530 | obtaining a plurality of intermediate predictions |
| 540 | ensembling the plurality of intermediate predictions to obtain an ensemble prediction |
| 550 | using the ensemble prediction as a substitute for the output of the trained machine learning model |
| 1000 | computer readable medium |
| 1001 | computer readable medium |
| 1010 | writable part |
| 1020 | computer program |
| 1110 | processing subsystem |
| 1120 | processing unit |
| 1122 | memory |
| 1124 | dedicated integrated circuit |
| 1126 | communication element |
| 1130 | interconnect |
| 1140 | system |

**Detailed description of embodiments**

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

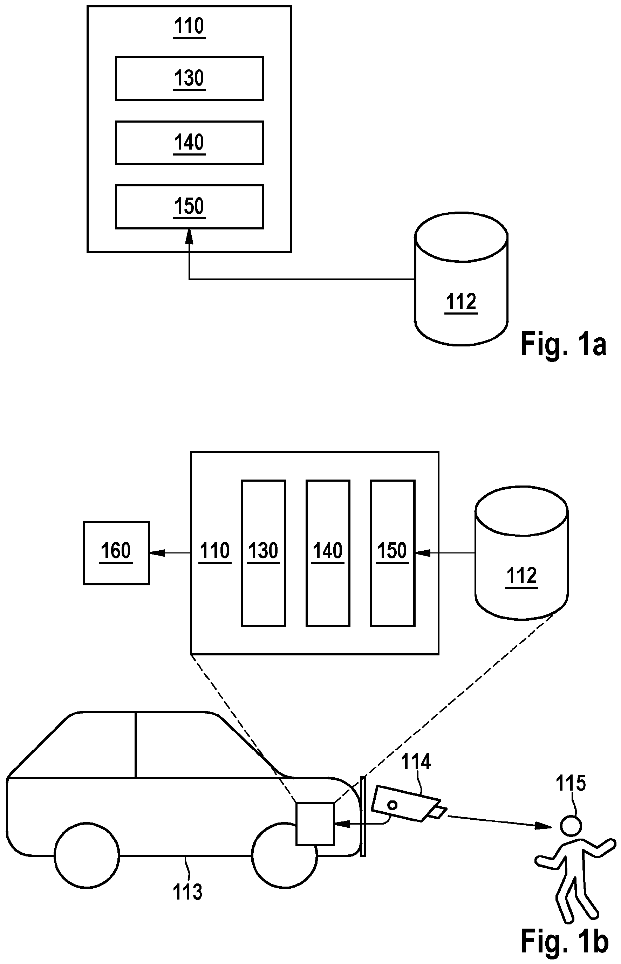

**Fig. 1a** shows an embodiment of a system 110 which may be configured to perform classification using a trained machine learning model. The system 110 may comprise a processing subsystem 130, a memory 140, and a communication interface 150. The system 110 may access input data such as sensor data obtained from one or more sensors, for example radar data, lidar data, ultrasound data, or image sensor data. For example, the input data may be accessed via the communication interface 150 from a data storage 112. The data storage 112 may be a local storage of the system 110, e.g., a local hard drive or memory. However, the storage 112 may also be non-local storage, e.g., a network-accessible storage, such as a cloud storage. In other examples, the system 110 may access the input data directly from one or more sensors, e.g., without at least temporarily storing the input data on a data storage 112. In such examples, the communication interface 150 may be a sensor interface to the one or more sensors.

The processing subsystem 130 may be configured to perform classification using a trained machine learning model. The trained machine learning model may comprise one or more input layers, a plurality of intermediate layers, and one or more output layers to generate an output of the trained machine learning model.

In performing classification in real-time or near-real time using complex machine learning models, a system such as the system 100 typically only has a limited computational budget for performing the classification. In some examples, it may not be known in advance how much computational budget is available at any given time.

To address the problem the limited computational budget may pose, the trained machine learning model may be executed in as far as the computational budget allows, using only a part of the training machine learning model through which the input data may be propagated. The part of the training machine learning model may be determined by the computational budget. The processing subsystem 130 may be configured to, during operation of the system 110, feed input data into the trained machine learning model, partially perform a forward pass by partially propagating the input data through the part of the trained machine learning model, obtain a plurality of intermediate predictions from respective outputs of a plurality of layers in the part of the trained machine learning model, ensemble the plurality of intermediate predictions to obtain an ensemble prediction, wherein the ensembling comprises determining the ensemble prediction as a product of weighted versions of the plurality of intermediate predictions and having a normalized probability density, and use the ensemble prediction as a substitute for the output of the trained machine learning model in the classification.

These and other aspects of the operation of the system 110 will be explained in more detail elsewhere in this specification, including with reference to Figs. 1b-2d.

In general, the system 110 may communicate with external storage, input devices, output devices, and/or one or more sensors, for example over a computer network. The computer network may be an internet, an intranet, a LAN, a WLAN, etc. The computer network may be the Internet. As previously explained with reference to Fig. 1a, the system 110 may comprise a communication interface which is arranged to communicate within the system or outside of the system as needed. For example, the communication interface may be, e.g., a wired interface, e.g., an Ethernet interface, an optical interface, etc., or a wireless interface, e.g., a radio interface, e.g., a Wi-Fi, 4G or 5G radio interface.

In general, the system 110 may be implemented in or as a processor system, e.g., using one or more processor circuits, e.g., microprocessors, examples of which are shown herein. The processor system may comprise a processing subsystem which may be wholly or partially implemented in computer instructions that are stored at system 110, e.g., in an electronic memory of system 110, and may be executable by a microprocessor of system 110. In hybrid embodiments, the processing subsystem may be implemented partially in hardware, e.g., as coprocessors, e.g., machine learning coprocessors, and partially in software stored and executed on system 110. Parameters of the machine learning model and/or input data may be stored locally at system 110 or may be stored in cloud storage. In general, a storage may be distributed over multiple distributed sub-storages. Part or all of the memory may be an electronic memory, magnetic memory, etc. For example, the storage may have volatile and a non-volatile part. Part of the storage may be read-only. The system 110 may have a user interface, which may include well-known elements such as one or more buttons, a keyboard, display, touch screen, etc. The user interface may be arranged for accommodating user interaction for configuring the system, training a machine learning model on training data, or applying the trained machine learning model to input data, etc.

In general, the system 110 may be implemented in a single device. Typically, the system comprises a microprocessor which executes appropriate software stored at the system; for example, that software may have been downloaded and/or stored in a corresponding memory, e.g., a volatile memory such as RAM or a non-volatile memory such as Flash. Alternatively, the system may, in whole or in part, be implemented in programmable logic, e.g., as field-programmable gate array (FPGA). The system may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, system 110 may comprise circuits for the evaluation of machine learning models such as neural networks.

**Fig. 1b** shows an example of a system 110 configured to perform classification using a trained machine learning model inside a car 113. In this implementation, the machine learning model may have been trained to detect traffic participants 115 in camera images obtained from a camera. After the training, the trained machine learning model 110 may be used inside the car 113 for real-time or near-real time classification. The camera images acquired by the camera 114 may be temporarily stored in the data storage 112 which is connected to the communication interface 150. The processing subsystem 130 then may perform classification using the stored camera images as input, enabling the car 113 to recognize the traffic participants 115 nearby the car 113. In some examples, the system 110 may be configured to control one or more actuators in the car 113 or other computer-controlled machine, for example via an actuator interface 160 which may be part of or external to the system 110. By controlling one or more actuators, the car 113 may be controlled to react correctly, if needed, to those other traffic participants 115, through, e.g., steering, braking, or giving rise to a warning. While the above refers specifically to a car, it will be appreciated that the system 110 may control any other computer-controllable machine via an actuator interface. For example, the system 110 may control a robotic system, such as a warehouse robot or an industrial robot, or any type of vehicle, a domestic appliance, a power tool, a manufacturing machine, a personal assistant or an access control system, based on the classification results. In another example, a system for conveying information may be controlled based on the classification results, such as a surveillance system or a medical (imaging) system. In yet other examples, the system 110 may be part of such a computer-controllable machine or part of a system for conveying information. In general, the system 110 may be used to classify objects in sensor data which is acquired of the physical surroundings of the system 110 or in sensor data which is acquired the physical surroundings of the machine which is controlled by the system 110.

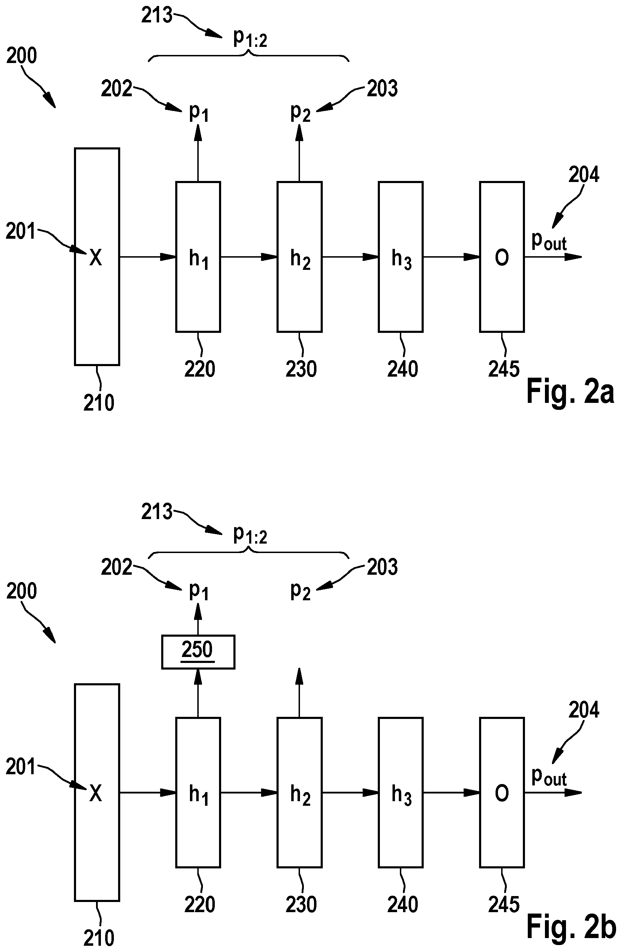

**Fig. 2a** shows a trained machine learning model 200, comprising an input layer 210, two intermediate layers 220,230,240 $h_1$, $h_2$ and $h_3$, and an output layer 245 $o$ generating an output 204 $p_{out}$ of the trained machine learning model 200. In this example, the trained machine learning model 200 is an early-exit network. It is noted, however, that the measures described in the following with reference to Fig. 2a are equally applicable to other types of trained machine learning models as described elsewhere in this specification.

When the trained machine learning model 200 is used for classification, input data 201 $x$ is fed into the input layer 210 of the trained machine learning model 200, containing for example sensor data obtained from one or more sensors, for example radar data, lidar data, ultrasound data, or image sensor data.

Since the system executing the trained machine learning model may be constrained in its computational budget, a forward pass may only be partially performed, namely until the second intermediate layer 230 $h_2$, thereby omitting the third intermediate layer 240 $h_3$ and the output layer 245 $o$. The forward pass may involve partially propagating the input data 201 $x$ through the part of the trained machine learning model constituting the two intermediate layers 220-230, namely $h_1$ and $h_2$. The part of the trained machine learning model through which the input data 201 is propagated may be determined by a computational budget available to the system executing the trained machine learning model.

Two intermediate predictions 202,203 $p_1$ and $p_2$ may be obtained from the respective outputs of the two intermediate layers 220,230 $h_1$ and $h_2$. This may involve application of an activation function $a$, which may be used to map logits to probabilities, to the outputs of the intermediate layers 220,230 $h_1$, $h_2$, which are commonly vectors of logits $f(y,x)_k$ of the $k$'th layer ($k = 1,2$ here), based on the input $x$, which may be a feature vector in a feature space, containing for examples natural images, and the associated class $y$, which may be in a label space, which may be a categorical encoding of the multiple classes $l = 1, ..., K$ that may be involved in the classification task. The $f$ vectors may be of the size of the amount of classes $K$ involved in the classification task, and may contain logit values, which may function values representing probability values, e.g., values between 0 and 1. This way, activation outputs $a(f(y,x)_k)$ may be obtained for each layer $h_k$, where $k = 1,2$. After this, the activation output may be normalized in order to obtain probabilities. In other words, for layer $k = 1, ...m$ (with $m = 2$ here), the system may obtain:

$$p_k(y|x) = \frac{a(f(y,x)_k)}{\sum_{y' \in \{1,...,K\}} a(f(y',x)_k)}$$

As activation function $a$, the rectified linear unit (ReLU) $a(x) = \max\{x, 0\}$ may be used, a ReLU $a_b(x) = \max\{x, b\}$ associated with a threshold $b$, or an approximation of the ReLU function, such as the softplus activation function $a(x) = \log(1 + e^x)$. Another example of an activation function which may be used is the Heaviside activation function $a(x) = [x > 0]$ or a Heaviside function $a(x) = [x > b]$ associated with a threshold $b$, with the Iverson bracket $[P]$ being 1 if P is true and 0 otherwise, which may be the derivative of the ReLU function.

The intermediate predictions $p_1,p_2$ 202,203 may be ensembled to obtain an ensemble prediction 213 $p_{1:2}$ for use as a substitute for the output 204 $p_{out}$ of the trained machine learning model 200. The ensembling may comprise determining the ensemble prediction 213 $p_{1:2}$ as a product of weighted versions of the two intermediate predictions 202,203 $p_1,p_2$ and having a normalized probability density. For example, the product-of-experts approach may be employed, wherein the weighted versions of the intermediate predictions 202,203 are weighted by exponentiating the intermediate prediction 202,203 $p_1,p_2$ with a non-negative value $w_k$, with $w_k$ also being referred to as the weight. In other words, this may yield for the ensemble prediction 213:

$$p_{1:m}(y|x) = \frac{1}{Z_m} \prod_{k=1}^{m} p_k^{w_k}(y|x)$$

where m may denote the number of the intermediate exit layer, which is here $m = 2$.

Here, $Z_m$ may denote a normalization constant, which may be the sum of the products of the intermediate predictions over the label space:

$$Z_m = \sum_{y \in \{1,...,K\}} \prod_{k=1}^{m} p_k^{w_k}(y|x)$$

**Fig. 2b** shows another example of a trained machine learning model 200, which may not necessarily be an early-exit network. In this example, there may be an additional, intermediate output-generating layer 250, which output-generating layer 250 may be provided at an output side of the intermediate layer 220 $h_1$. The intermediate output-generating layer 250 may be configured to convert an output of intermediate layer 220 $h_1$ into the intermediate prediction so that the intermediate prediction is of a same type as the otherwise final prediction. For example, if the machine learning model 200 is configured to generate a vector of $1 \times N$ as output containing the probabilities for $N$ classes, the intermediate output-generating layer 250 may be configured to convert the output of the intermediate layer 220 $h_1$ into a same vector of $1 \times N$. Such an intermediate output-generating layer may be provided for all or a subset of the intermediate layers of the trained machine learning model 200, and may be separate from the model 200 or provided as an add-on, in that the intermediate output-generating layer 250 may not be part of the model 200 during training.

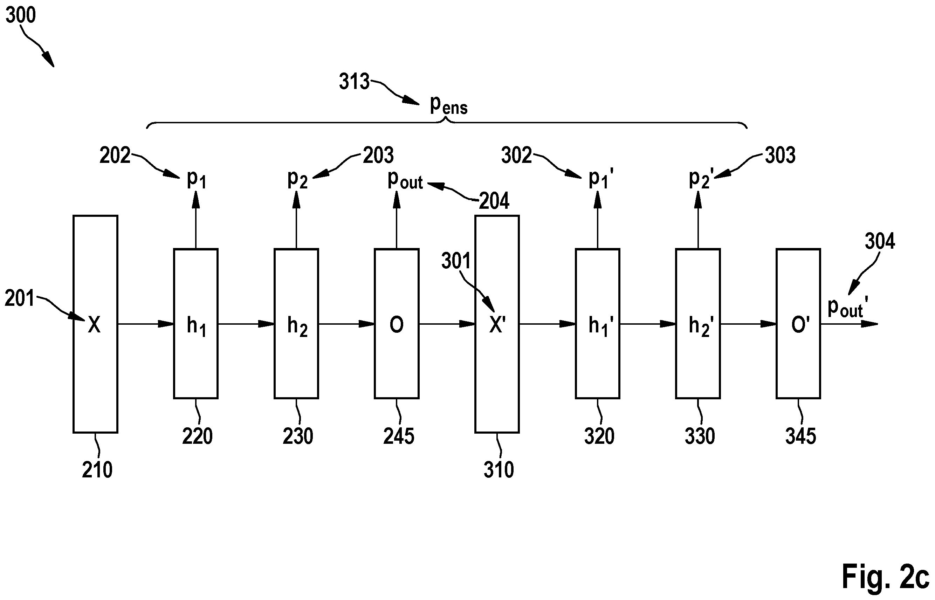

**Fig. 2c** shows another example of a trained machine learning model 300. In this example, the trained machine learning model 300 may comprise an ensemble of a plurality of trained machine learning sub-models. Here, the trained machine learning sub-models are early-exit networks as well, but the trained machine learning model may also comprise an ensemble of a plurality of other types of trained machine learning sub-models. In Fig. 2c, two trained machine learning models are shown to be serially arranged, with the output layer 245 $o$ of the first serially arranged trained machine learning sub-model being arranged in such a way, that its output serves as an input 301 $x'$ for the second serially arranged trained machine learning sub-model. During execution of this trained machine learning model 300, the part which is executed may include intermediate layers from the first sub-model and in some cases also from the second sub-model. In the example of Fig. 2c, the part of the trained machine learning model which is executed includes the intermediate layers 220,230,320,330 and the intermediate output layer 245 and the intermediate input layer 310 and may yield the ensembled prediction 313 $p_{ens}$ based on the intermediate predictions 202,203,204,302,303, $p_1, p_2, p_{out}, p_1', p_2'$. The ensemble prediction 313 may then serve as substitute for the output 304 of the trained machine learning model $p_{out}'$.

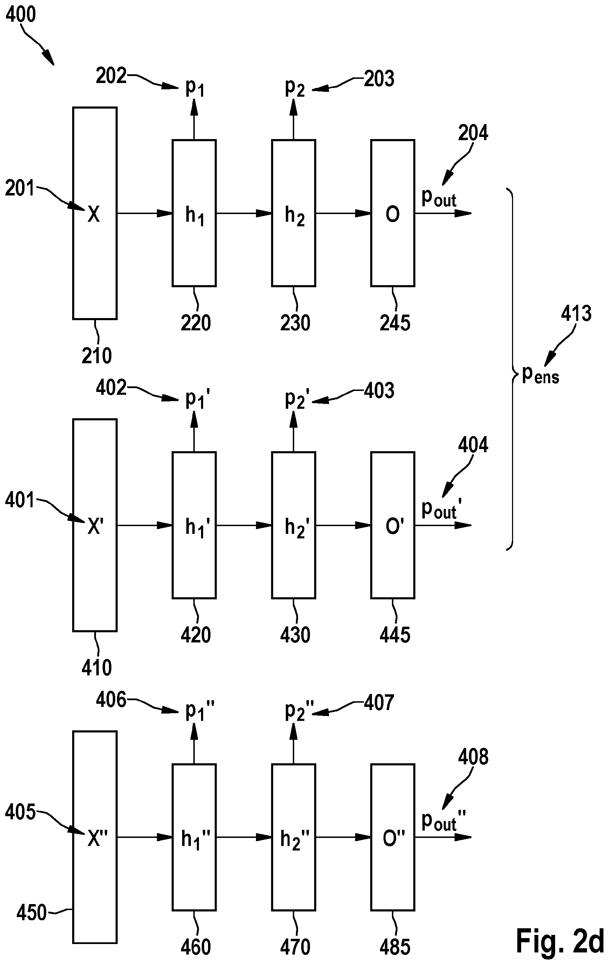

**Fig. 2d** shows another example of a trained machine learning model 400. In this example, the trained machine learning model 400 may comprise an ensemble of a plurality of trained machine learning sub-models. The trained machine learning sub-models may be early-exit neural networks or other types of trained machine learning sub-models as well. In Fig. 2d, three trained machine learning models are shown to be arranged in a parallel manner, with three different input layers 210,410,450 and three different output layers 245,444,485 $o,o',o''$ of the first, resp. second, resp. third parallel-arranged trained machine learning sub-model. The computational budget may in this example only allow execution of the first two trained machine learning sub-models. Accordingly, the outputs of the output layers 245,445 $o,o'$ of the respective trained machine learning sub-models may yield respective output predictions 204,404 $p_{out}, p_{out}'$, which may serve as the intermediate predictions so as to generate the ensemble prediction 413 $p_{ens}$. The ensemble prediction 413 $p_{ens}$ may then serve as a substitute for an output of the trained machine learning model 400, which output would otherwise require evaluation of the third trained machine learning sub-model.

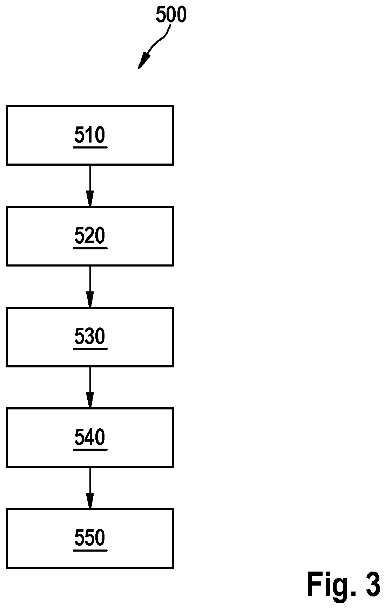

**Fig. 3** shows a computer-implemented method 500 for performing classification using a trained machine learning model. The method 500 is shown to comprise steps 510-550. The first step 510 may comprise feeding input data into the trained machine learning model. The second step 520 may comprise partially performing a forward pass by partially propagating the input data through a part of the trained machine learning model. The third step 530 may comprise obtaining a plurality of intermediate predictions from respective outputs of a plurality of layers in the part of the trained machine learning model. The fourth step 540 may comprise ensembling the plurality of intermediate predictions to obtain an ensemble prediction, wherein the ensembling comprises determining the ensemble prediction as a product of weighted versions of the plurality of intermediate predictions and having a normalized probability density. The fifth step 550 may comprise using the ensemble prediction as a substitute for the output of the trained machine learning model in the classification.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform the method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

In examples where the machine learning model is a neural network, the neural network may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

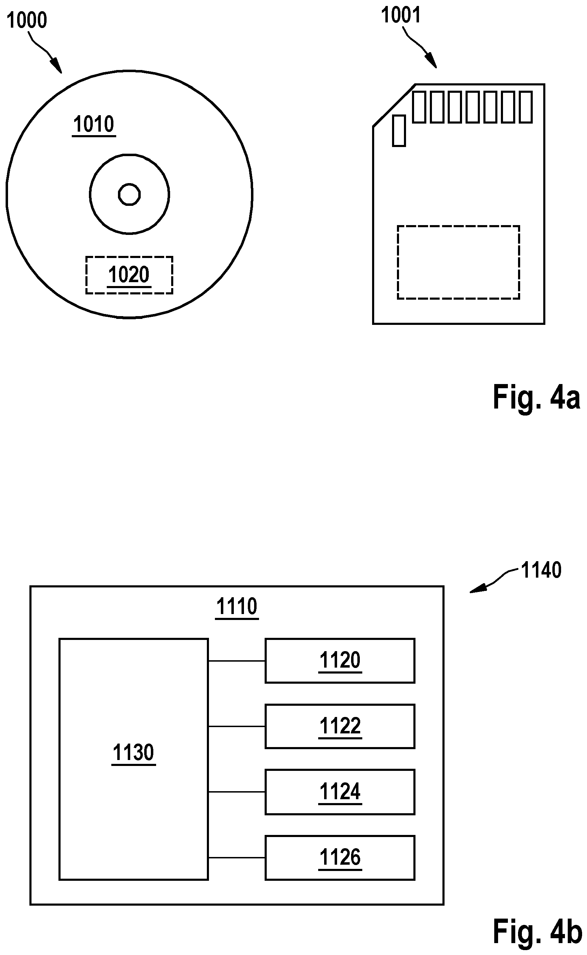

**Fig. 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for performing classification using a trained machine learning model, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 may comprise instructions for causing a processor system to perform said method of performing classification using a trained machine learning model.

**Fig. 4b** shows a schematic representation of a system 1140 according to an embodiment. The system comprises one or more processing subsystems 1110. The architecture of the one or more processing subsystems 1110 is schematically shown in Figure 4b. Processing subsystem 1110 comprises a processing unit 1120, e.g., a CPU, for running computer program components to execute a method according to an embodiment and/or implement its modules or units. Processing subsystem 1110 comprises a memory 1122 for storing programming code, data, etc. Part of memory 1122 may be read-only. Processing subsystem 1110 may comprise a communication element 1126, e.g., an antenna, connectors or both, and the like. Processing subsystem 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor subsystem 1110 may be arranged for contact and/or contact-less communication, using an antenna and/or connectors, respectively.

For example, in an embodiment, system 1140, e.g., a system configured to perform the method according to an embodiment, may comprise a processor subsystem and a memory circuit, the system being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It will be apparent that various information described as stored in a storage may be additionally or alternatively stored in the memory 1130. In this respect, the memory 1130 may also be considered to constitute a "storage device" and the storage may be considered a "memory." Various other arrangements will be apparent. Further, the memory 1130 and the storage may both be considered to be "non-transitory machine-readable media." As used herein, the term "non-transitory" will be understood to exclude transitory signals but to include all forms of storage, including both volatile and non-volatile memories.

While system 1140 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (500) for classifying input data using a trained machine learning model (200,300,400), wherein the trained machine learning model (200,300,400) comprises one or more input layers (210,310,410,450), a plurality of intermediate (220,230,240,320,330,420,430,460,470), and one or more output layers (245,345,445,485) to generate an output (204,304,404,408) of the trained machine learning model (200,300,400), the method comprising:

- feeding (510) input data (201,301,401,405) into the trained machine learning model (200,300,400);
- partially performing (520) a forward pass by partially propagating the input data (201,301,401,405) through a part (220-230,220-230-245-320-330,245-445) of the trained machine learning model (200,300,400);
- obtaining (530) a plurality of intermediate predictions (202-203,202-203-204-302-303,204-404) from respective outputs of a plurality of layers (220,230,245,320,330,445) in the part (220-230,220-230-245-320-330,245-445) of the trained machine learning model (200,300,400);
- ensembling (540) the plurality of intermediate predictions (202-203,202-203-204-302-303,204-404) to obtain an ensemble prediction (213,313,413), wherein the ensembling comprises determining the ensemble prediction (213,313,413) as a product of weighted versions of the plurality of intermediate predictions (202-203,202-203-204-302-303,204-404) and having a normalized probability density; and
- using (550) the ensemble prediction as a substitute for the output (204,304,404) of the trained machine learning model (200,300,400) in the classifying of the input data.

2. A method (500) as in claim 1, wherein obtaining the plurality of intermediate predictions (202-203,202-203-204-302-303,204-404) comprises, for a respective intermediate prediction (202,203,204,302,303,404):

- applying an activation function to an output of a layer (220,230,245,320,330,245,445) to obtain an activation function output for the layer (220,230,245,320,330,245,445);
- normalizing the activation function output by a sum of activation function outputs of all of the plurality of layers (220,230,245,320,330,245,445) in the part (220-230,220-230-245-320-330,245-445) of the trained machine learning model (200,300,400).

3. A method (500) as in claim 2, wherein the activation function comprises one of a rectified linear unit, an approximation of the rectified linear unit, such as a softplus activation function, and a Heaviside activation function.

4. A method (500) as in any of the preceding claims, wherein a weighted version of an intermediate prediction (202,203,204,302,303,404) is weighted by exponentiating the intermediate prediction (202,203,204,302,303,404) with a non-negative value.

5. A method (500) as in any of the preceding claims, wherein the normalized probability density is obtained by scaling with a normalization constant.

6. A method (500) as in any of the preceding claims, wherein the trained machine learning model (200,300,400) comprises at least one of a neural network, a support vector machine, and a Gaussian process.

7. A method (500) as in any of the preceding claims, wherein the trained machine learning model (200,300,400) is an anytime model, for example an early-exit neural network.

8. A method (500) as in any of the preceding claims, wherein the trained machine learning model (300,400) comprises an ensemble of a plurality of trained machine learning sub-models.

9. A method (500) as in claim 8, wherein the ensemble of the plurality of trained machine learning sub-models is one of:

- a serial arrangement of trained machine learning sub-models;
- a parallel arrangement of trained machine learning sub-models, wherein the part (245,445) of the trained machine learning model (400) is a subset of the plurality of trained machine learning sub-models and wherein the plurality of intermediate predictions (204,404) is obtained from respective output layers of the subset; and
- a combination of the serial arrangement and the parallel arrangement of trained machine learning sub-models.

10. A method (500) as in any of the preceding claims, wherein the input data comprises image data and the classifying of the input data comprises classifying the image data.

11. A method (500) as in any of the preceding claims, wherein the input data (201,301,401) comprises sensor data obtained from one or more sensors, for example radar data, lidar data, ultrasound data, or image sensor data.

**12.** A method (500) as in any of the preceding claims, further comprising executing the method (500) in real-time or near-real time using a processing subsystem (1110) of a device, wherein the processing subsystem (1110) has a computational budget for classifying the input data, wherein an extent of the forward pass and thereby the part (220-230,220-230-245-320-330,245-445) of the trained machine learning model (200,300,400) through which the input data (201,301,401) is propagated is determined by the computational budget.

**13.** A method (500) as in any of the preceding claims, further comprising controlling a computer-controlled machine based on the ensemble prediction (213,313,413).

**14.** A transitory or non-transitory computer-readable medium (1000) comprising data (1020) representing instructions which, when executed by a processor system, cause the processor system to perform the computer-implemented method (500) according to any one of claims 1 to 13.

**15.** A system (1140) comprising a processing subsystem (1110) configured to perform the method (500) according to any one of claims 1 to 13.

**Amended claims in accordance with Rule 137(2) EPC.**

**1.** A computer-implemented method (500) for classifying input data (201,301,401,405) using a trained machine learning model (200,300,400), wherein the method (500) is executed using a processing subsystem (130) of a system (110), wherein the processing subsystem (130) has a computational budget for classifying the input data (201,301,401,405) in real-time or near-real-time, wherein the computational budget is a dynamic computational budget which changes over time, wherein the trained machine learning model (200,300,400) comprises one or more input layers (210,310,410,450), a plurality of intermediate layers (220,230,240,320,330,420,430,460,470), and one or more output layers (245,345,445,485) to generate an output (204,304,404,408) of the trained machine learning model (200,300,400), the method comprising:

- feeding (510) input data (201,301,401,405) into the trained machine learning model (200,300,400);
- partially performing (520) a forward pass by partially propagating the input data (201,301,401,405) through a part (220-230,220-230-245-320-330,245-445) of the trained machine learning model (200,300,400), wherein an extent of the forward pass and thereby the part (220-230,220-230-245-320-330,245-445) of the trained machine learning model (200,300,400) through which the input data (201,301,401) is propagated are determined by a currently available computational budget;
- obtaining (530) a plurality of intermediate predictions (202-203,202-203-204-302-303,204-404) from respective outputs of a plurality of layers (220,230,245,320,330,445) in the part (220-230,220-230-245-320-330,245-445) of the trained machine learning model (200,300,400);
- ensembling (540) the plurality of intermediate predictions (202-203,202-203-204-302-303,204-404) to obtain an ensemble prediction (213,313,413), wherein the ensembling comprises determining the ensemble prediction (213,313,413) as a product of weighted versions of the plurality of intermediate predictions (202-203,202-203-204-302-303,204-404) and having a normalized probability density; and
- using (550) the ensemble prediction as a substitute for the output (204,304,404) of the trained machine learning model (200,300,400) in the classifying of the input data.

**2.** A method (500) as in claim 1, wherein obtaining the plurality of intermediate predictions (202-203,202-203-204-302-303,204-404) comprises, for a respective intermediate prediction (202,203,204,302,303,404):

- applying an activation function to an output of a layer (220,230,245,320,330,245,445) to obtain an activation function output for the layer (220,230,245,320,330,245,445);
- normalizing the activation function output by a sum of activation function outputs of all of the plurality of layers (220,230,245,320,330,245,445) in the part (220-230,220-230-245-320-330,245-445) of the trained machine learning model (200,300,400).

**3.** A method (500) as in claim 2, wherein the activation function comprises one of a rectified linear unit, an approximation of the rectified linear unit, such as a softplus activation function, and a Heaviside activation function.

**4.** A method (500) as in any of the preceding claims, wherein a weighted version of an intermediate prediction (202,203,204,302,303,404) is weighted by exponentiating the intermediate prediction (202,203,204,302,303,404) with a non-negative value.

5. A method (500) as in any of the preceding claims, wherein the normalized probability density is obtained by scaling with a normalization constant.

6. A method (500) as in any of the preceding claims, wherein the trained machine learning model (200,300,400) comprises at least one of a neural network, a support vector machine, and a Gaussian process.

7. A method (500) as in any of the preceding claims, wherein the trained machine learning model (200,300,400) is an anytime model, for example an early-exit neural network.

8. A method (500) as in any of the preceding claims, wherein the trained machine learning model (300,400) comprises an ensemble of a plurality of trained machine learning sub-models.

9. A method (500) as in claim 8, wherein the ensemble of the plurality of trained machine learning sub-models is one of:

　　- a serial arrangement of trained machine learning sub-models;
　　- a parallel arrangement of trained machine learning sub-models, wherein the part (245,445) of the trained machine learning model (400) is a subset of the plurality of trained machine learning sub-models and wherein the plurality of intermediate predictions (204,404) is obtained from respective output layers of the subset; and
　　- a combination of the serial arrangement and the parallel arrangement of trained machine learning sub-models.

10. A method (500) as in any of the preceding claims, wherein the input data comprises image data and the classifying of the input data comprises classifying the image data.

11. A method (500) as in any of the preceding claims, wherein the input data (201,301,401) comprises sensor data obtained from one or more sensors, for example radar data, lidar data, ultrasound data, or image sensor data.

12. A method (500) as in any of the preceding claims, wherein the system (110) is configured to control one or more actuators in a computer-controlled machine based on the ensemble prediction (213,313,413).

13. A transitory or non-transitory computer-readable medium (1000) comprising data (1020) representing instructions which, when executed by a processor system, cause the processor system to perform the computer-implemented method (500) according to any one of claims 1 to 12.

14. A system (1140) comprising a processing subsystem (1110) configured to perform the method (500) according to any one of claims 1 to 12.

Fig. 1a

Fig. 1b

Fig. 2a

Fig. 2b

Fig. 2c

EP 4 471 678 A1

Fig. 2d

500

```
┌──────────────┐
│     510      │
└──────────────┘
        │
        ▼
┌──────────────┐
│     520      │
└──────────────┘
        │
        ▼
┌──────────────┐
│     530      │
└──────────────┘
        │
        ▼
┌──────────────┐
│     540      │
└──────────────┘
        │
        ▼
┌──────────────┐
│     550      │
└──────────────┘
```

Fig. 3

1000

1010

1020

1001

**Fig. 4a**

1140

1110

1130

1120

1122

1124

1126

**Fig. 4b**

## EUROPEAN SEARCH REPORT

| | Application Number |
|---|---|
| | EP 23 17 6816 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Urquhart James ET AL: "A Product of Experts Approach to Early-Exit Ensembles", Workshop on Dynamic Neural Networks, International Conference on Machine Learning 2022, 22 July 2022 (2022-07-22), XP093099061, Retrieved from the Internet: URL:https://dynn-icml2022.github.io/papers /paper_10.pdf [retrieved on 2023-11-08] * page 1 – page 4 * * Appendices A and B * ----- | 1-15 | INV. G06N20/20 G06N3/045 ADD. G06N3/084 |
| A | ADRIA RUIZ ET AL: "Anytime Inference with Distilled Hierarchical Neural Ensembles", ARXIV.ORG, CORNELL UNIVERSITY LIBRARY, 201 OLIN LIBRARY CORNELL UNIVERSITY ITHACA, NY 14853, 14 December 2020 (2020-12-14), XP081836243, * page 1 – page 7 * * Appendices A and B * ----- | 1-15 | |
| A | XIN WANG ET AL: "Deep Mixture of Experts via Shallow Embedding", ARXIV.ORG, CORNELL UNIVERSITY LIBRARY, 201 OLIN LIBRARY CORNELL UNIVERSITY ITHACA, NY 14853, 5 June 2018 (2018-06-05), XP081200500, * the whole document * ----- | 1-15 | TECHNICAL FIELDS SEARCHED (IPC) G06N |
| A | EP 3 996 054 A2 (SAMSUNG ELECTRONICS CO LTD [KR]) 11 May 2022 (2022-05-11) * the whole document * ----- | 1-15 | |

The present search report has been drawn up for all claims

| Place of search | Date of completion of the search | Examiner |
|---|---|---|
| The Hague | 9 November 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6816

This annex lists the patent family members relating to the patent documents cited in  the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| EP 3996054 | A2 | 11-05-2022 | CN | 116438570 A | 14-07-2023 |
| | | | EP | 3996054 A2 | 11-05-2022 |
| | | | US | 2023128637 A1 | 27-04-2023 |
| | | | WO | 2022098203 A1 | 12-05-2022 |

EPO FORM P0459

For more details about this annex : see Official Journal of the European Patent Office, No. 12/82